# EUROPÄISCHE PATENTANMELDUNG

(11) **EP 3 486 199 A1**
(43) Veröffentlichungstag der Anmeldung: **22.05.2019**
(21) Anmeldenummer: 17202023.2
(22) Anmeldetag: 16.11.2017
(51) Int. Cl.: B65G 53/20, B65G 53/52, B01F 5/06, B01F 5/00

(54) **FÖRDERVORRICHTUNG FÜR SCHÜTTGUT MIT INTEGRIERTEM MISCHER**

(71) Anmelder: Claudius Peters Projects GmbH, 21614 Buxtehude (DE)
(72) Erfinder: Hilck, Arne, 21684 Stade (DE); Raabe, Matthias, 21614 Buxtehude (DE)
(74) Vertreter: Glawe, Delfs, Moll

(57) **Zusammenfassung**

Die Erfindung betrifft eine Fördervorrichtung (1) für Schüttgu mit einem Förderbereich (4) und einem durch ein gasdurchlässigen Fluidisierboden (5) abgetrennten Bereich (6) für die Zufuhr eines Fluidisiergases. Die Fördervorrichtung erstreckt sich mit einer Hauptströmungsrichtung (90) von einem ersten Ende (2) zu einem zweiten Ende (3) erstreckt, wobei zwischen dem ersten und dem zweiten Ende (2, 3) der Fördervorrichtung (1) eine Mischvorrichtung (10) zum Durchmischen von durch die Fördervorrichtung (1) geförderten Schüttgut angeordnet ist.

## Beschreibung

Die Erfindung betrifft eine Fördervorrichtung für Schüttgut.

Zur Förderung von Schüttgut innerhalb von Industrieanlagen sind Fördervorrichtungen bekannt, bei denen das Schüttgut mit Hilfe von Luft fluidisiert wird, wodurch es sich vergleichbar zu einer Flüssigkeit verhält und entsprechend durch abschüssige Rinnen oder Rohrleitungen gefördert werden kann. Die Fördervorrichtungen weisen dazu einen gasdurchlässigen Boden auf, durch den ständig Fludisierluft gefördert wird.

In vielen Bereichen der Industrie, in denen mit fluidisierfähigem Schüttgut gearbeitet wird, kommen neben entsprechenden Fördervorrichtungen für diverse Schüttgüter weiterhin auch Mischanlagen zum Einsatz, mit denen zwei oder mehr zugeführte Schüttgüter miteinander vermischt werden, sodass ein möglichst homogenes Schüttgutgemisch für die Weiterverarbeitung bzw. Weiterförderung bereitgestellt wird. Entsprechende Mischanlagen kommen bspw. in der Zementindustrie zum Einsatz, um die einzelnen, in Form von Schüttgut vorliegenden Ausgangsstoffe für Mischzemente miteinander zu vermischen. Als Mischanlagen sind Turbulentmischer, welche die gewünschte Mischung unter sehr hohem Energieeinsatz erreichen, und statische Mischer, die eine große Bauhöhe aufweisen, bekannt.

Der Erfindung liegt die Aufgabe zugrunde gegenüber den aus dem Stand der Technik bekannten Turbulentmischern effizienter eine Mischung von fluidisierbarem Schüttgut bei gleichzeitig niedriger Bauhöhe zu erreichen.

Gelöst wird diese Aufgabe durch eine Fördervorrichtung gemäß dem Hauptanspruch. Vorteilhafte Weiterbildungen sind Gegenstand der abhängigen Ansprüche.

Demnach betrifft die Erfindung eine Fördervorrichtung für Schüttgut mit einem Förderbereich und einem durch einen gasdurchlässigen Fluidisierboden abgetrennten Bereich für die Zufuhr eines Fluidisiergases, wobei sich die Fördervorrichtung mit einer Hauptströmungsrichtung von einem ersten Ende zu einem zweiten Ende erstreckt und wobei zwischen dem ersten und dem zweiten Ende der Fördervorrichtung eine Mischvorrichtung zum Durchmischen von durch die Fördervorrichtung geförderten Schüttgut angeordnet ist.

Der Erfindung liegt die Erkenntnis zugrunde, dass in Vorrichtungen zur Förderung von fluidisiertem Schüttgut aufgrund der Eigenschaft des Schüttgut-Gas-Gemisches als fluides Medium eine Durchmischung des Schüttgutstroms durch eine geeignete Mischvorrichtung bereits in der Fördervorrichtung selbst möglich ist. Dabei wird das durch die Fördervorrichtung strömende Schüttgut homogenisiert, d.h. die im Schüttgut grundsätzlich vorhandenen Bestandteile werden möglichst gleichmäßig verteilt. Um bei Bedarf mehrere unterschiedliche Schüttgüter mit Hilfe einer erfindungsgemäßen Fördervorrichtung zu vermischen, müssen die Schüttgüter im richtigen Verhältnis parallel in die Fördervorrichtung aufgegeben werden, bspw. durch eine geeignete, der Fördervorrichtung vorgeschaltete Dosieranlage. Durch die unmittelbar in der Fördervorrichtung angeordnete Mischvorrichtung mag die Förderleistung der Fördervorrichtung gemindert werden; jedoch wird eine sehr energieeffiziente Durchmischung des Schüttgutes erreicht.

Die Mischvorrichtung kann einen oder mehrere sich über den Querschnitt des Förderbereichs der Fördervorrichtung erstreckenden Einsätze umfassen. Durch entsprechende Einsätze, die letztendlich Barrieren für den Schüttgutstrom darstellen, werden in den ansonsten regelmäßig laminaren Fluss des Schüttgut-Gas-Gemisches Turbulenzen eingebracht, die der Durchmischung dienen. Die entsprechenden Einsätze können dabei vertikal und/oder horizontal angeordnet sein. Durch vertikal angeordnete Einsätze lassen sich Turbulenzen hauptsächlich in horizontaler Richtung induzieren, während sich durch horizontal angeordnete Einsätze insbesondere eine Durchmischung sich ggf. im Schüttgutstrom ausgebildeter Schichten (bspw. von Schüttgütern mit unterschiedlichen Eigenschaften) erreichen lassen. Indem sich die Einsätze über den Querschnitt des Förderbereichs der Fördervorrichtung erstrecken, ist es möglich, diese beidseitig einzuspannen, was im Hinblick auf die durch den Schüttgutstrom auf die Einsätze einwirkenden Kräfte vorteilhaft ist. Die Einsätze selbst können einen beliebigen Querschnitt aufweisen und bspw. rund, rechteckig, quadratisch, dreieckig oder V-förmig sein.

Ist mehr als ein Einsatz vorgesehen, können zwei Einsätze sich parallel zueinander erstreckend, derart quer zur Hauptströmungsrichtung versetzt zueinander angeordnet sein, dass wenigstens ein Teil des durch den ersten Einsatz abgelenkten Schüttgutstroms auf den zweiten Einsatz auftrifft. Der auf den ersten Einsatz dieser Anordnung auftreffende Schüttgutstrom wird nämlich zwingend abgelenkt und in Hauptströmungsrichtung zu mindestens einer Seite (häufig zu beiden Seiten) seitlich an dem ersten Einsatz vorbeigeführt, wodurch zum einen die gewünschte Turbulenz, zum anderen ein gewisser Nachlauf entsteht. Ist nun das zweite Element in eben einem solchen Nachlauf angeordnet, wird eine besonders gute Durchmischungswirkung durch das zweite Element erreicht. Wird der Schüttgutstrom zu beiden Seiten des ersten Einsatzes seitlich vorbeigeführt ist es selbstverständlich auch möglich zwei zweite Einsätze vorzusehen, wobei jeweils ein zweiter Einsatz im einem der beiden Nachläufe des ersten Einsatzes angeordnet ist. Diese Anordnung von erstem und zweitem Einsatz kann bei beliebig orientierten Einsätzen, insbesondere also auch bei sowohl vertikal als auch horizontal angeordneten Einsätzen, vorteilhaft sein.

In diesem Zusammenhang ist besonders bevorzugt, wenn die zwei Einsätze jeweils einen keil- oder v-förmigen Querschnitt aufweisen und mit der Keilspitze entgegen der Hauptströmungsrichtung angeordnet sind, wobei die Keilspitze des zweiten Einsatzes im Nachlauf einer der Schenkelenden des keilförmigen ersten Einsatzes angeordnet ist.

Es ist weiter bevorzugt, wenn der oder die Einsätze symmetrisch zur Mittelachse der Fördervorrichtung angeordnet sind. Dies gilt insbesondere für vertikal angeordnete Einsätze, bei denen die Symmetrieebene vorzugsweise vertikal entlang der Mittelachse der Fördervorrichtung verläuft. Durch eine entsprechende symmetrische Anordnung wird eine vergleichbare Durchmischung zu beiden Seiten der Mittelachse der Fördervorrichtung erreicht.

Durch die vorstehend beschriebenen Einsätze lässt sich eine gute Homogenisierung eines Schüttgutstroms über seinen Querschnitt erreichen. Schwankungen in der Zusammensetzung des Schüttgutstroms entlang der Hauptströmungsrichtung, die bspw. durch nicht exakt arbeitende vorgeschaltete Dosiereinrichtungen entstehen können, lassen sich durch entsprechende Einsätze jedoch nur bedingt ausgleichen.

Um alternativ oder zusätzlich eine Durchmischung eines Schüttgutstroms in Hauptströmungsrichtung zu erreichen, ist vorzugsweise im Förderbereich der Fördervorrichtung ein überströmbares Wehr zum Aufstauen des Schüttgutstroms in Hauptströmungsrichtung angeordnet. Durch ein entsprechendes Wehr wird der Schüttgutstrom aufgestaut und erst nachströmendes, in das aufgestaute Schüttgut hinein stoßendes Schüttgut erhöht den Schüttgutpegel derart, dass das Wehr von Schüttgut überströmt wird. Durch das Hineinstoßen von nachströmenden Schüttgut in das vor dem Wehr aufgestaute Schüttgut ergibt sich eine Durchmischung des Schüttgutes, durch welches u.a. auch Schwankungen der Schüttgutzusammensetzung in Hauptströmungsrichtung ausgeglichen werden.

Es ist bevorzugt, wenn das Wehr in wenigstens einem Abschnitt höheneinstellbar ist, wobei vorzugsweise ein steuerbarer Antrieb zur Höheneinstellung des Wehrs vorgesehen ist. Durch eine entsprechende Einstellbarkeit kann die durch das Wehr erreichte Durchmischung des Schüttgutstroms sowie der Volumenstrom des Schüttguts im Bereich des Wehrs verändert werden. Dabei ist insbesondere möglich, wenn eine die Oberseite des Wehrs wenigstens teilweise bildende Kante des Wehrs nicht horizontal ausgestaltet ist. Bei einer entsprechenden Ausgestaltung lässt sich die dem Verlauf der fraglichen Kante entsprechende lokale Höhe des Wehrs durch horizontales Verschieben des Wehrs verändern.

Um die Durchmischung des Schüttgutstroms weiter zu steigern, kann die Fördervorrichtung eine Fallstufe umfassen, wobei der Auffangbereich für das fallende Schüttgut ein durch das Wehr aufgestauter Bereich ist. In anderen Worten soll die Fördervorrichtung zweigeteilt ausgeführt sein, sodass in Hauptströmung fließendes Schüttgut aus einem freien Ende des ersten Teils der Fördervorrichtung heraustritt und schwerkraftbedingt in den zweiten Teil der Fördervorrichtung fällt, wobei eben der Bereich, in dem das fallende Schüttgut aufgefangen wird, durch ein Wehr aufgestaut ist. Durch die beim Fallen und insbesondere beim Auftreffen auf bereits aufgestautes Schüttgut entstehende Dynamik im Schüttgut ergibt sich eine weiter verbesserte Durchmischung, insbesondere in Hauptströmungsrichtung.

Alternativ zum Vorsehen einer Fallstufe kann die Fördervorrichtung im Bereich der Mischvorrichtung auch wenigstens zwei Wehrkanäle mit unterschiedlicher Länge umfassen, an deren Ende ein Wehr zum Aufstauen von Schüttgutstrom im jeweiligen Förderbereich eines Wehrkanals vorgesehen ist und die in hinter dem Wehr wieder zusammengeführt werden. Ziel einer solchen Ausgestaltung ist es, den Schüttgutstrom (vorzugsweise gleichmäßig) auf die einzelnen Wehrkanäle zu verteilen, wobei aufgrund deren unterschiedlicher Länge das über einen kurzen Zeitraum in die Mischvorrichtung einströmende Schüttgut über einen längeren Zeitraum verteilt wieder abgegeben wird. Dadurch wird erreicht, dass zu unterschiedlichen Zeitpunkten in die Mischvorrichtung eintretendes Schüttgut miteinander vermischt und abgegeben wird, sodass letztendlich eine Durchmischung des Schüttguts in Hauptströmungsrichtung erreicht wird.

Unabhängig von der letztendlichen Ausgestaltung der Mischvorrichtung kann es vorteilhaft sein, wenn der Querschnitt der Fördervorrichtung in dem Bereich der Mischvorrichtung gegenüber den Bereichen abseits der Mischvorrichtung größer, vorzugsweise breiter ist. Im Falle von Einsätzen, insbesondere vertikalen Einsätzen als Mischvorrichtung kann durch einen entsprechend größeren Querschnitt der für den Schüttgutstrom freie Querschnitt ausreichend groß gewählt werden, um zumindest einen unnötig hohen, die gewünschte Durchmischung nicht zwingend fördernden Strömungswiderstand zu vermeiden. Für den Fall, dass die Mischvorrichtung ein Wehr umfasst, kann durch eine Querschnittsvergrößerung das Aufstauvolumen vergrößert werden, ohne dass die Aufstauhöhe auf ein die Fluidisierung stark erschwerendes Maß ansteigt. Für das Vorsehen von Wehrkanälen ist ein insgesamt vergrößerter Querschnitt der Fördervorrichtung ebenfalls vorteilhaft.

Auch wenn sich zumindest einige der vorgeschlagenen Varianten einer Mischvorrichtung für pneumatische Förderleitungen, in denen das Schüttgut nicht nur fluidisiert, sondern zusätzlich durch ein Fördergas entlang der Förderleitung gefördert wird, eignen, ist bevorzugt, wenn die Fördervorrichtung eine vom ersten Ende zum zweiten Ende hin monoton fallende, vorzugsweise streng monoton fallende Förderrinne ist. Bei einer Förderrinne, die nach oben hin geschlossen oder offen ausgestaltet sein kann, wird Gas, insb. Luft, ausschließlich zum Fluidisieren von Schüttgut eingesetzt. Die eigentliche Förderung erfolgt rein schwerkraftbedingt, weshalb die Förderrinne in der Regel wenigstens monoton fallend, bevorzugt streng monoton fallend ausgestaltet sein sollte. Ein typischer Neigungswinkel für eine solche Förderrinne liegt zwischen 6° und 8°. Jedenfalls muss das zweite Ende der Fördervorrichtung geodätisch tiefer liegen als das erste Ende.

Die Erfindung wird nun anhand vorteilhafter Ausführungsformen unter Bezugnahme auf die beigefügten Zeichnungen beispielhaft beschrieben. Es zeigen:
- Figur 1:: ein erstes Ausführungsbeispiel einer erfindungsgemäßen Fördervorrichtung;
- Figur 2:: ein zweites Ausführungsbeispiel einer erfindungsgemäßen Fördervorrichtung;
- Figur 3:: ein drittes Ausführungsbeispiel einer erfindungsgemäßen Fördervorrichtung; und
- Figur 4:: ein viertes Ausführungsbeispiel einer erfindungsgemäßen Fördervorrichtung.

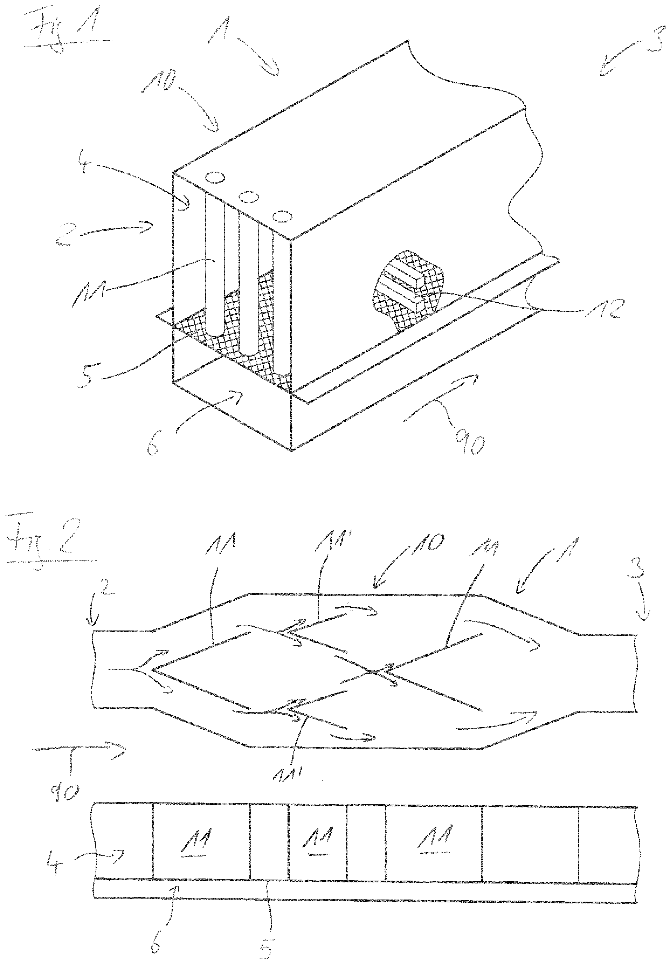

In Figur 1 ist ein Abschnitt einer erfindungsgemäßen Fördervorrichtung 1 für Schüttgut dargestellt, wobei der dargestellte Abschnitt das erste Ende 2 der Fördervorrichtung 1 zeigt, während das zweite Ende 3 nicht unmittelbar dargestellt ist. Die Hauptströmungsrichtung 90 weist vom ersten Ende 2 zum zweiten Ende 3.

Die Fördervorrichtung 1 ist als geschlossene Förderrinne ausgebildet und weist einen Förderbereich 4 auf, in dem das Schüttgut letztendlich transportiert wird. Der Boden des Förderbereichs 4 ist als gasdurchlässiger Fluidisierboden 5 ausgebildet, unter dem ein Bereich 6 für die Zufuhr von Fluidiserungsgas, insbesondere Luft, ausgebildet ist. Die Fördervorrichtung 1 ist in Richtung der Hauptströmungsrichtung 90 monoton fallend, sodass das zweite Ende 3 der Fördervorrichtung 1 geodätisch unterhalb des ersten Endes 2 ist.

Im Förderbereich 4 der Fördervorrichtung 1 ist eine Mischvorrichtung 10 vorgesehen. Die Mischvorrichtung 10 umfasst drei symmetrisch über die Breite des Förderbereichs 4 verteilte, vertikal angeordnete Einsätze 11 mit rundem Querschnitt sowie zwei horizontal angeordnete Einsätze 12 mit quadratischem Querschnitt, die in einer Höhe über dem Fluidisierboden 5 angeordnet sind, dass sie im Betrieb vom Schüttgutstrom umströmt werden. Die Einsätze 11, 12 erstrecken sich jeweils über den gesamten Förderbereich 4 und sind beidseitig eingespannt.

Durch die vertikal angeordneten Einsätze 11 werden Turbulenzen insbesondere in horizontaler Richtung in einen durch die Fördervorrichtung 1 strömenden Schüttgutstrom eingebracht, durch die horizontal angeordneten Einsätze 12 werden ggf. im Schüttgutstrom ausgebildete Schichten miteinander vermengt. Es wird so eine gute Homogenisierung des Schüttgutstroms erreicht.

In Figur 2 ist ein zweites Ausführungsbeispiel einer erfindungsgemäßen Fördervorrichtung 1 schematisch in einer Draufsicht und einer seitlichen Schnittansicht dargestellt.

Die Fördervorrichtung 1 ist in Bezug auf Förderbereich 4, Fluidisierboden 5 und Bereich 6 für die Zufuhr eines Fluidisiergases vergleichbar zu der Fördervorrichtung 1 gemäß Figur 1 ausgestaltet. Abweichend von der vereinfachten Darstellung in Figur 2 ist die Fördervorrichtung 1 tatsächlich stetig monoton fallend vom ersten Ende 2 zum zweiten Ende 3 hin angeordnet.

In der Fördervorrichtung 1 sind mehrere vertikale Einsätze 11 vorgesehen, die symmetrisch zur Mittelachse der Fördervorrichtung 1 angeordnet sind. Die Einsätze 11 sind V-förmig bzw. keilförmig ausgestaltet, wobei die Einsätze 11 jeweils mit ihrer Keilspitze entgegen der Hauptströmungsrichtung 90 ausgerichtet sind. Die Umströmung der Einsätze 11 ist durch Pfeile angedeutet.

In Hauptströmungsrichtung 90 gesehen sind hinter einem ersten Einsatz 11 zwei zweite Einsätze 11' vorgesehen. Diese zweiten Einsätze 11' sind derart versetzt zum ersten Einsatz 11 angeordnet, dass ihre jeweiligen Keilspitzen im Nachlauf des ersten Einsatzes 11, genauer in dem jeweiligen Nachlauf eines der Schenkelenden des keilförmigen ersten Einsatzes 11 angeordnet sind. Das durch den ersten Einsatz 11 abgelenkte Schüttgut trifft also grundsätzlich auf einem der beiden zweiten Einsätze 11' auf.

Die Fördervorrichtung 1 weist im Bereich der Mischvorrichtung 10 einen breiteren Querschnitt als in den übrigen Bereichen auf. Der freie Strömungsquerschnitt im Bereich der Mischvorrichtung 10 - also der für den Schüttgutstrom zur Verfügung stehende Querschnitt zwischen den Wänden der Fördervorrichtung 1 und den Einsätzen 11 - ist so an keiner Stelle der Mischvorrichtung 11 geringer als in den Bereichen der Fördervorrichtung 1 abseits der Mischvorrichtung 10. Eine unnötige Erhöhung des Strömungswiderstandes wird so vermieden, wobei dennoch eine gute Homogenisierung des Schüttgutstroms erfolgt.

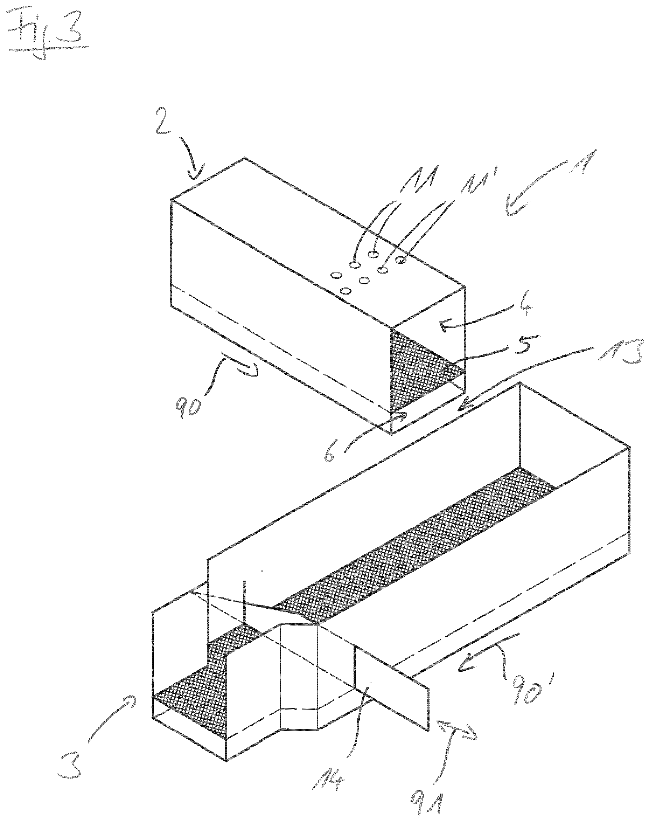

Die Fördervorrichtung 1 gemäß Figur 3 ist als derart zweigeteilte Förderrinne ausgeführt, dass zwischen dem ersten Ende 2 und dem zweiten Ende 3 eine Fallstufe 13 für das Schüttgut vorgesehen ist. Zwischen dem ersten Ende 2 und der Fallstufe 13 sind vertikale Einsätze 11 im Förderbereich 4 der Fördervorrichtung 1 angeordnet, die vergleichbar denen aus Figur 1 sind. Es wird daher auf die diesbezüglichen Ausführungen verwiesen. Die in Figur 3 lediglich angedeuteten Einsätze 11 sind in zwei Reihen senkrecht zur Hauptströmungsrichtung 90 in diesem Bereich derart versetzt zueinander angeordnet, dass das durch die Einsätze 11 der ersten Reihe umgelenkte Schüttgut jeweils auf einen Einsatz 11' der zweiten Reihe auftrifft.

An der Fallstufe 13 tritt das Schüttgut aus dem einen Teil der Fördervorrichtung 1 aus und fällt schwerkraftbedingt in den zweiten Teil der Fördervorrichtung 1. Der Bereich, in dem das fallende Schüttgut aufgefangen wird, ist dabei durch ein Wehr 14 aufgestaut, wobei das Wehr 14 bei ausreichender Höhe des Schüttgutbetts überströmt wird. Das Wehr 14 ist - wie durch den Doppelpfeil 91 angedeutet - horizontal verschiebbar, bspw. auch durch eine (nicht dargestellte) steuerbare Antriebseinheit. Desweiteren weist das Wehr 14 eine teilweise nicht horizontal verlaufende Kante 15 auf, sodass durch horizontales Verschieben des Wehrs 14 dennoch eine Einstellung der Höhe des Wehrs 14 entsprechend dem Verlauf der Kante 15 möglich ist. Durch diese Höheneinstellung kann die Gutbetthöhe im Aufstaubereich sowie die Überlaufmenge an Schüttgut geregelt werden. Es ist aber selbstverständlich auch möglich, ein vertikal verfahrbares Wehr 14, bspw. mit horizontaler Oberkante 15, oder ein um eine Drehachse drehbares Wehr 14 vorzusehen.

Um trotz des Aufstauen des Schüttguts durch das Wehr 14 die Höhe des Schüttgutbetts nicht derart ansteigen zu lassen, dass eine Fluidisierung des Schüttgutes schwierig wird, ist der Querschnitt der Fördervorrichtung 1 im Bereich des Aufstauens bzw. Auffangens des über die Fallstufe 13 fallenden Schüttguts breiter als im übrigen Bereich der Fördervorrichtung 1.

Durch die beim Fallen und insbesondere beim Auftreffen auf bereits aufgestautes Schüttgut entstehende Dynamik im Schüttgut ergibt sich eine sehr gute Durchmischung des Schüttguts, wobei nicht nur eine gute Homogenisierung erreicht wird, sondern darüber hinaus auch Schwankungen in der Schüttgutzusammensetzung entlang der Hauptströmungsrichtung 90 - bspw. aufgrund von nicht exakt gleichbleibender Dosierung bei der Aufgabe von unterschiedlichen Schüttgütern im Vorfeld der Fördervorrichtung 1 (nicht dargestellt) - ausgeglichen werden.

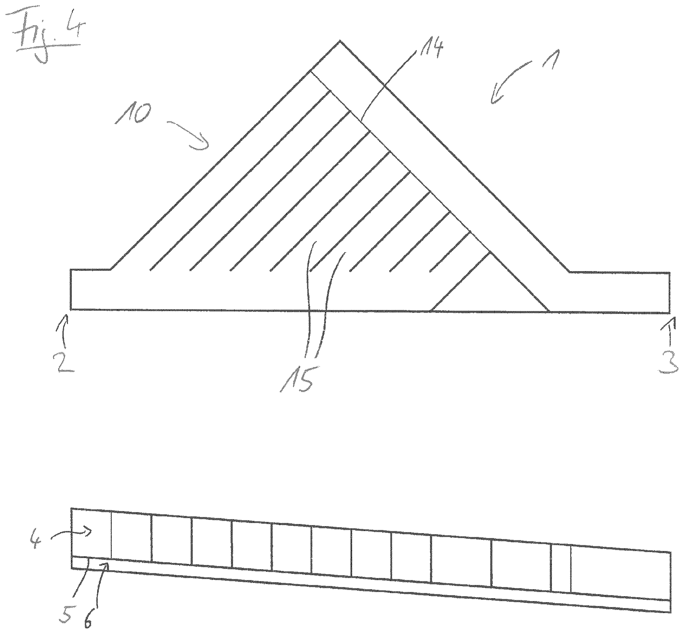

In Figur 4 ist ein weiteres Ausführungsbeispiel einer erfindungsgemäßen Fördervorrichtung 1 in Draufsicht und seitlicher Schnittansicht dargestellt, welche den grundsätzlichen Aufbau einer Förderrinne mit Förderbereich 4, Fluidisierboden 5 und darunterliegendem Bereich 6 zur Zufuhr von Fluidisiergas aufweist, und von ihrem ersten Ende 2 zu ihrem zweiten Ende 3 hin monoton fallend ist.

Ausgehend von dem ersten Ende 2 fächert sich der Strömungskanal für das Schüttgut in eine Vielzahl von (im dargestellten Ausführungsbeispiel 9) Wehrkanälen 15 auf, die jeweils eine unterschiedliche Länge aufweisen und an ihrem vom ersten Ende 2 entfernten Ende ein Wehr 14 zum Aufstauen eines Schüttgutstrom im jeweiligen Wehrkanal 15 vorgesehen ist. Das Wehr 14 kann als sich über sämtliche Wehrkanäle 15 erstreckendes einstückiges Element ausgebildet sein, wobei eine evtl. Einstellung des Wehrs 14 bspw. durch eine Höheneistellung an den beiden Enden des Wehrs 14 realisiert werden kann. Das Wehr 14 ist dabei so eingestellt, dass die Überströmung des Wehrs 14 über die einzelnen Wehrkanäle 15 gleichverteilt ist. Über einen Zeitraum soll also aus jedem Wehrkanal 15 gleichviel Schüttgut über das Wehr 14 strömen. Das aus den einzelnen Wehrkanälen 15 überströmende Schüttgut wird anschließend wieder vermengt und zusammen zum zweiten Ende 3 der Fördervorrichtung 1 gefördert. Da das Überströmen des Wehrs 14 regelmäßig oberhalb des hinter dem Wehr 14 verlaufenden Schüttgutstroms erfolgt, fällt das überströmte Schüttgut in den fraglichen Schüttgutstrom, sodass hier ähnlich zur oben beschriebenen Fallstufe eine gute Durchmischung des aus den einzelnen Wehrkanälen 15 stammenden Schüttguts erreicht wird.

Indem das Wehr 14 so eingestellt ist, dass das über das Wehr 14 in den einzelnen Wehrkanälen 15 überströmende Schüttgutvolumen im Wesentlichen gleich ist, wird gleichzeitig eine gleichmäßige Verteilung des am ersten Ende zuströmenden Schüttguts auf die einzelnen Wehrkanäle 15 erreicht. Da die Wehrkanäle 15 unterschiedliche Längen aufweisen und somit unterschiedliche Verweilzeiten des darin befindlichen Schüttguts auftreten, wird letztendlich eine Durchmischung des Schüttguts in Hauptströmungsrichtung erreicht. Dadurch können insbesondere Schwankungen in den Eigenschaften des zugeführten Schüttguts ausgeglichen werden.

## Patentansprüche

1. Fördervorrichtung (1) für Schüttgut mit einem Förderbereich (4) und einem durch ein gasdurchlässiges Fluidisierboden (5) abgetrennten Bereich (6) für die Zufuhr eines Fluidisiergases, wobei sich die Fördervorrichtung (1) mit einer Hauptströmungsrichtung (90) von einem ersten Ende (2) zu einem zweiten Ende (3) erstreckt,
**dadurch gekennzeichnet, dass**
zwischen dem ersten und dem zweiten Ende (2, 3) der Fördervorrichtung (1) eine Mischvorrichtung (10) zum Durchmischen von durch die Fördervorrichtung (1) geförderten Schüttgut angeordnet ist.

2. Fördervorrichtung nach Anspruch 1,
**dadurch gekennzeichnet, dass**
die Mischvorrichtung (10) wenigstens einen sich über den Querschnitt des Förderbereichs (4) der Fördervorrichtung (1), vorzugsweise vertikal und/oder horizontal, erstreckenden Einsatz (11, 12) umfasst.

3. Fördervorrichtung nach Anspruch 2,
**dadurch gekennzeichnet, dass**
wenigstens zwei parallel erstreckende Einsätze (11, 12) vorgesehen sind, die derart quer zur Hauptströmungsrichtung (90) versetzt zueinander angeordnet sind, dass wenigstens ein Teil des durch den ersten Einsatz (11) abgelenkten Schüttgutstroms auf den zweiten Einsatz (11') auftrifft.

4. Fördervorrichtung nach Anspruch 3,
**dadurch gekennzeichnet, dass**
die zwei Einsätze (11) jeweils einen keil- oder v-förmigen Querschnitt aufweisen, wobei die Keilspitze des zweiten Einsatzes (11') im Nachlauf eines der Schenkelenden des keilförmigen ersten Einsatzes (11) angeordnet ist.

5. Fördervorrichtung nach einem der Ansprüche 2 bis 4,
**dadurch gekennzeichnet, dass**
der oder die Einsätze (11, 12) symmetrisch zur Mittelachse der Fördervorrichtung (1) angeordnet sind.

6. Fördervorrichtung nach einem der vorhergehenden Ansprüche,
**dadurch gekennzeichnet, dass**
im Förderbereich (4) der Fördervorrichtung (1) ein überströmbares Wehr (14) zum Aufstauen des Schüttgutstroms in Hauptströmungsrichtung (90) angeordnet ist.

7. Fördervorrichtung nach Anspruch 6,
**dadurch gekennzeichnet, dass**
das Wehr (14) in wenigstens einem Abschnitt höheneinstellbar ist, wobei vorzugsweise ein steuerbarer Antrieb zur Höheneinstellung des Wehrs (14) vorgesehen ist.

8. Fördervorrichtung nach Anspruch 6 oder 7,
**dadurch gekennzeichnet, dass**
die Fördervorrichtung (1) eine Fallstufe (13) umfasst, wobei der Auffangbereich für das fallende Schüttgut der durch das Wehr (14) aufgestaute Bereich ist.

9. Fördervorrichtung nach einem der Ansprüche 6 bis 8,
**dadurch gekennzeichnet, dass**
die Fördervorrichtung (1) im Bereich der Mischvorrichtung (10) wenigstens zwei Wehrkanäle (15) mit unterschiedlicher Länge umfasst, an deren Ende jeweils ein Wehr (14) zum Aufstauen eines Schüttgutstrom im jeweiligen Förderbereich (4) vorgesehen ist und die in hinter dem Wehr (14) wieder zusammengeführt werden.

10. Fördervorrichtung nach einem der vorhergehenden Ansprüche,
**dadurch gekennzeichnet, dass**
der Querschnitt der Fördervorrichtung (1) im Bereich der Mischvorrichtung (10) gegenüber den Bereichen abseits der Mischvorrichtung (10) größer, vorzugsweise breiter ist.

11. Fördervorrichtung nach einem der vorhergehenden Ansprüche,
**dadurch gekennzeichnet, dass**
die Fördervorrichtung (1) eine vom ersten Ende (2) zum zweiten Ende (3) hin monoton fallende Förderrinne ist.
